# EUROPÄISCHE PATENTSCHRIFT

(11) **EP 1 236 162 B1**
(45) Veröffentlichungstag und Bekanntmachung des Hinweises auf die Patenterteilung: **01.02.2006**
(21) Anmeldenummer: 00988569.0
(22) Anmeldetag: 09.11.2000
(51) Int. Cl.: G06K 9/00

(54) **BIOMETRISCHER SENSOR UND VERWENDUNG EINER LEITERBAHNFOLIE**
BIOMETRICAL SENSOR AND THE USE OF A STRIP CONDUCTOR FILM
CAPTEUR BIOMETRIQUE ET UTILISATION D'UNE MEMBRANE A PISTE CONDUCTRICE

(30) Priorität: 10.12.1999 DE 19959644
(43) Veröffentlichungstag der Anmeldung: 04.09.2002
(73) Patentinhaber: Infineon Technologies AG, 81669 München (DE)
(72) Erfinder: ZELLNER, Maximilian, 85244 Röhrmoos (DE); WOSSLER, Manfred, 81479 München (DE)
(74) Vertreter: Epping - Hermann - Fischer
(86) Internationale Anmeldenummer: PCT/DE2000/003923
(87) Internationale Veröffentlichungsnummer: WO 2001/043059

(56) Entgegenhaltungen:
- US-A- 4 394 773

## Beschreibung

Elektronisch arbeitende biometrische Sensoren ermitteln anhand eines Rasters von Sensorelementen die Oberflächenstruktur der Haut einer aufgelegten Fingerbeere oder einer Hand- oder Fußfläche. Aus den ermittelten Sensorsignalen ist eine biometrische Erkennung der betreffenden Person möglich. Über einen solchen Sensor lassen sich daher die Identität einer Person oder deren Zugangsberechtigung zu einer elektronischen Vorrichtung oder dergleichen feststellen. Damit kann sichergestellt werden, dass nur die berechtigte Personen ein Gerät oder ein Fahrzeug oder dergleichen nutzt; außerdem besteht die Möglichkeit, bestimmte benutzerspezifische Eigenschaften der betreffenden Vorrichtung automatisch einzustellen, ohne dass die benutzende Person weitere Einstellungen an der Apparatur vornehmen muss. Ein Problem ist dabei, für eine ergonomische und zweckmäßige Anordnung des Sensors an dem betreffenden Bedienteil zu sorgen.

Bei kapazitiv messenden Fingerabdrucksensoren (s. z.B. M. Tartagni und R. Guerrieri: "A 390 dpi Live Fingerprint Imager Based on Feedback Capacitive Sensing Scheme" in 1997 IEEE Internaticnal Solid-State Circuits Conference, S. 200-201) ist vorzugsweise nur eine strukturierte Schicht elektrischer Leiter vorhanden, die z.B. durch eine strukturierte Metallschicht in einem Halbleiterbauelement gebildet sein kann. Den Bildpunkten eines zur erfassenden Fingerabdruckes sind Leiterflächen als Einzelsensoren zugeordnet. Eine Kapazität oder Kapazitätsänderung gegenüber der Umgebung bei Auflegen einer Fingerbeere wird für jede Leiterfläche einzeln festgestellt. Grundsätzlich besteht die Möglichkeit, derartige Metallschichten als Metallisierungen auch auf nichtplanaren Oberflächen, z.B. mittels Laserstrahlung zu strukturieren. Dabei handelt es sich um einen sehr kostenintensiven, sequentiellen Prozess, der zudem mit verfahrensbedingten Nachteilen (Lasergrat, Verdampfungsrückstände usw.) behaftet ist. Eine weitere Möglichkeit stellt die Strukturerzeugung mittels Fotoätztechnik dar. Soll diese Technik auf einer nichtebenen Oberfläche angewendet werden, muss für die Fotolithografie (Maskentechnik) entweder ebenfalls ein Laserprozess verwendet werden, oder es wird eine 3D-Belichtung verwendet. Bei dieser 3D-Belichtung wird eine Folienmaske verwendet, deren Auflösung allerdings begrenzt ist und für die Realisierung von Strukturen, wie sie bei einem Fingerabdrucksensor erforderlich sind, nicht ausreicht. Beide Belichtungsvarianten erfordern außerdem sehr gleichmäßige Fotolackschichten, die nicht problemlos erzeugt werden können. Es wird daher als selbstverständlich angesehen, dass kapazitiv messende Fingerabdrucksensoren nur in einer ebenen Sensorfläche hergestellt werden.

In der nachveröffentlichten Schrift WO00/13129, die von der gleichen Anmelderin stammt, ist ein Verfahren zur Herstellung metallischer Feinstrukturen beschrieben, mit dem auch Sensoranordnungen zur Erfassung von Fingeradrucken hergestellt werden können. Bei diesem Verfahren wird eine dünne Basisschicht aus einem flexiblen organischen Material (Folie) auf einen starren Hilfsträger aufgebracht, die gewünschten Feinstrukturen auf der Basisschicht erzeugt und die Basisschicht vom Hilfsträger durch Einwirkung von Laserstrahlung, die durch den Hilfsträger hindurch auf die Basisschicht gerichtet wird, abgelöst, so dass die Folie mit den metallischen Feinstrukturen übrig bleibt. Ein Fingerabdrucksensor kann damit hergestellt werden, indem die Folie auf eine geeignete Oberfläche aufgeklebt wird, z.B. auf ein Bauteil, in dem elektronische Schaltung zu Erzeugung und Auswertung von Sensorsignalen integriert sind.

In dem Dokument US 4,394,773 ist ein Fingerabdrucksensor beschrieben, der nach dem piezoelektrischen Prinzip arbeitet. Die Fingerkuppe wird auf ein piezoelektrisches Material, an deren Ober- und Unterseite Sensorflächen aufgebracht sind, gelegt. Durch die Höhenunterschiede der erhabenen Fingerlinien im Vergleich zu den Hautrillen variiert der Druck auf das piezoelektrische Material, was zu unterschiedlichen Ladungsansammlungen auf den Sensorflächen führt. Das piezoelektrische Material kann auch mit einer der Krümmung der Fingerkuppe nachempfundenen Oberseite ausgestaltet sein.

Aufgabe der vorliegenden Erfindung ist es, aufzuzeigen, wie Fingerabdrucksensoren ergonomisch und praktisch in einer Vielzahl von Geräten und Apparaturen so eingesetzt werden können, dass eine hohe Auflösung bei einfachster Handhabung erreicht wird.

Diese Aufgabe wird mit dem Fingerabdrucksensor mit den Merkmalen des Anspruches 1 bzw. mit der Verwendung einer Folie mit einer strukturierten Leiterschicht mit den Merkmalen des Anspruches 8 gelöst. Jeweilige Ausgestaltungen ergeben sich aus den abhängigen Ansprüchen.

Bei dem erfindungsgemäßen biometrischen Sensor wird eine rasterförmige Anordnung von schichtartig ausgebildeten Leiterflächen, die als kapazitiv messende Sensorelemente vorgesehen sind, in einer gekrümmten Auflagefläche angebracht, so dass die Leiterflächen entsprechend der Flächenkrümmung ausgerichtet sind. Es ist auf diese Weise möglich, den Sensor insbesondere als Fingerabdrucksensor z.B. als Griffmulde oder als besonders griffige Fläche eines Bedienteiles, wie z.B. eines Bedienhebels, eines Lenkrades, eines Griffes oder dergleichen, anzubringen. Damit kann erreicht werden, dass bereits mit der bestimmungsgemäßen Verwendung des Gegenstandes das Sensorsignal erzeugt wird und z.B. automatisch personenspezifische Einstellungen an dem bedienten Gegenstand vorgenommen werden. Der Sensor ist bevorzugt ein Foliensensor, bei dem die Auflagefläche für ein Körperteil durch eine in eine entsprechende Oberfläche des Gegenstandes eingeklebte Trägerfolie gebildet ist. Ein solcher Sensor kann als Fingerabdrucksensor z.B. die Griffmulde eines Bedienhebels bilden, die so angeordnet ist, dass die Kuppe des Fingers mit dem zu detektierenden Fingerabdruck beim Angreifen des Hebels von selbst auf der Auflagefläche des Fingerabdrucksensor in der Muldes zu liegen kommt. Die Nutzung des Bedienhebels wird dann z.B. nur den zugangsberechtigten Personen freigegeben. Ein derartiger griffmuldenartiger Fingerabdrucksensor kann auch z.B. in dem Lenkrad eines Autos eingebaut sein, um abhängig von dem jeweiligen Fahrer z.B. die Höhe des Fahrersitzes oder die Positionen der Außenspiegel automatisch einzustellen.

Entscheidend für die Realisierung eines modellierbaren Foliensensors ist die ausreichende Verformbarkeit der verwendeten Trägerfolie. Diese Verformbarkeit wird z.B. erreicht, wenn als Trägerfolie ein Polyimid mit hoher Elastizität (z.B. Probimid 115 A) verwendet wird, so dass nach Ablösung des gesamten bei der Herstellung verwendeten Schichtaufbaus die verbleibende dünne Trägerfolie auf eine gekrümmt geformte Oberfläche aufgeklebt werden kann. Je nach Bedarf, der von der Ausprägung und Beschaffenheit der Oberfläche abhängt, auf die die Sensorstrukturen aufgebracht werden sollen, lassen sich so auch extrem dünne Folien (Dicke unterhalb 5 µm) herstellen, die mit sehr feinen Leiterstrukturen versehen sind. Mittels geeigneter Vakuum- oder Stempelprozessen können diese Trägerfolien auf nahezu beliebig geformte Oberfläche übertragen werden.

Die Erfassung der Sensorsignale kann bei dem erfindungsgemäßen Sensor dadurch verbessert werden, dass die Auflagefläche des Sensors der Form der Fingerbeere oder einer Hand- oder Fußfläche nachgeformt ist. Durch die Krümmung der Sensorfläche entsprechend der abzubildenden Hautoberfläche wird die erfasste Fläche vergrößert. Insbesondere bei einem Fingerabdrucksensor führt eine Ausformung der Auflagefläche, die der Form der Fingerkuppe entspricht, zu einer verbesserten Positionierung des Fingers und erhöht somit die Reproduzierbarkeit der aufgenommenen Bilder, die zudem die Ränder des Fingerabdruckes mit umfassen.

Die verwendete Folie sollte vorzugsweise chemisch inert sein, ihr Elastizitätsmodul sollte anpassbar sein und ihre Dicke typisch bei 1 µm bis 3 µm liegen. Eine weitere Verbesserung des erfindungsgemäßen biometrischen Sensors erhält man, wenn der Untergrund der Auflagefläche aus einem weichen, elastischen, plastischen oder flexiblen Material besteht, so dass beim Auflegen der Fingerkuppe die Auflagefläche sich an die Form der Fingeroberfläche anschmiegt.

## Patentansprüche

1. Biometrischer Sensor mit einer gekrümmten Auflagefläche und mit einer rasterförmigen Anordnung von schichtartig ausgebildeten Leiterflächen als kapazitiv messenden Sensorelementen, wobei die Leiterflächen in einer Folie ausgebildet sind und diese Folie in einer der Auflagefläche entsprechenden gekrümmten Oberfläche eines Bedienteils formschlüssig angebracht ist.

2. Sensor nach Anspruch 1,
bei dem die Auflagefläche in ein Bedienteil derart eingebaut ist, dass ein Bedienungsvorgang mittels dieses Bedienteiles gleichzeitig eine Funktion des Sensors auslöst.

3. Sensor nach Anspruch 2,
bei dem die Auflagefläche ein Anteil einer Oberfläche eines Bedienhebels ist.

4. Sensor nach Anspruch 2,
bei dem die Auflagefläche ein Anteil einer Oberfläche eines Lenkrades ist.

5. Sensor nach Anspruch 2,
bei dem die Auflagefläche ein Anteil einer Oberfläche eines Griffes ist.

6. Sensor nach Anspruch 2,
bei dem die Auflagefläche ein Anteil einer Oberfläche eines Pedales ist.

7. Sensor nach Anspruch 1,
bei dem die Folie in einer Oberfläche eines elastischen oder flexiblen Materials eingebracht ist, so dass die Krümmung der Auflagefläche veränderbar ist.

8. Verwendung einer Folie mit einer strukturierten Schicht kontaktierbarer elektrischer Leiter, die als kapazitiv messende Sensorflächen eines biometrischen Sensors strukturiert sind, zur Ausbildung eines biometrischen Sensors mit einer Auflagefläche die gekrümmt ist, wobei die Leiterflächen entsprechend dieser Krümmung ausgerichtet sind.

9. Verwendung einer Folie nach Anspruch 8,
bei der die Folie auf eine Oberfläche eines Bedienteils geklebt wird.

## Claims

1. Biometric sensor having a curved support area and having a grid-like arrangement of conductor areas built up in a layered manner as sensor elements that measure capacitively, wherein the conductor areas are formed in a film, and this film is fitted with a form fit in a surface of an operating part that is curved in accordance with the support area.

2. Sensor according to Claim 1, in which the support area is incorporated into an operating part in such a way that an operating operation by means of this operating part simultaneously triggers a function of the sensor.

3. Sensor according to Claim 2, in which the support area is a proportion of a surface of an operating lever.

4. Sensor according to Claim 2, in which the support area is a proportion of a surface of a steering wheel.

5. Sensor according to Claim 2, in which the support area is a proportion of a surface of a handle.

6. Sensor according to Claim 2, in which the support area is a proportion of a surface of a pedal.

7. Sensor according to Claim 1, in which the film is inserted in a surface of a resilient or flexible material, so that the curvature of the support area can be varied.

8. Use of a film with a structured layer of electric conductors with which contact can be made and which are structured as capacitively measuring sensor areas of a biometric sensor, in order to form a biometric sensor with a support area which is curved, the conductor areas being aligned in accordance with this curvature.

9. Use of a film according to Claim 8, in which the film is adhesively bonded to a surface of an operating part.

## Revendications

1. Capteur biométrique ayant une surface d'appui courbée et ayant un agencement en forme de trame de surfaces conductrices constituées à la manière de couches en tant qu'éléments de capteur mesurant de façon capacitive, les surfaces conductrices étant constituées dans une feuille et cette feuille étant mise à complémentarité de forme dans une surface, courbée de manière correspondante à la surface d'appui, d'une pièce de manoeuvre.

2. Capteur suivant la revendication 1, dans lequel la surface d'appui est insérée dans une pièce de manoeuvre de façon à ce qu'une opération de manoeuvre au moyen de cette pièce de manoeuvre déclenche simultanément un fonctionnement du capteur ;

3. Capteur suivant la revendication 2, dans lequel la surface d'appui fait partie d'une surface d'un levier de manoeuvre.

4. Capteur suivant la revendication 2, dans lequel la surface d'appui fait partie d'une surface d'un volant.

5. Capteur suivant la revendication 2, dans lequel la surface d'appui fait partie d'une surface d'une poignée.

6. Capteur suivant la revendication 2, dans lequel la surface d'appui fait partie d'une surface d'une pédale.

7. Capteur suivant la revendication 1, dans lequel la feuille est incorporée dans une surface d'une matière élastique ou souple de manière à pouvoir modifier la courbure de la surface d'appui.

8. Utilisation d'une feuille ayant une couche structurée de conducteurs électriques qui peuvent mis en contact et qui sont structurés en tant que surfaces de capteur mesurant par voie capacitive d'un capteur biométrique pour la constitution d'un capteur biométrique ayant une surface d'appui qui est courbée, les surfaces conductrices étant dirigées conformément à cette courbure.

9. Utilisation d'une feuille suivant la revendication 8, dans laquelle la feuille est collée sur une surface d'une pièce de manoeuvre.
